# EUROPEAN PATENT SPECIFICATION

(11) **EP 3 267 179 B1**
(45) Date of publication and mention of the grant of the patent: **06.05.2020**
(21) Application number: 16759178.3
(22) Date of filing: 04.03.2016
(51) Int. Cl.: G01N 21/03, G01N 21/25, G01N 21/3577, G01N 21/85

(54) **MEASUREMENT DEVICE COMPRISING TRACE SAMPLE-USE HIGH SENSITIVITY LIGHT ABSORBING CELL**
MESSVORRICHTUNG MIT HOCHEMPFINDLICHER LICHTABSORBIERENDEN ZELLE ZUR VERWENDUNG ALS SPURENPROBE
DISPOSITIF DE MESURE COMPRENANT UNE CELLULE D'ABSORPTION DE LUMIÈRE À HAUTE SENSIBILITÉ POUR UTILISATION D'ÉCHANTILLON DE TRACE

(30) Priority: 05.03.2015 KR 20150030903
(43) Date of publication of application: 10.01.2018
(73) Proprietor: Korea Research Institute Of Standards And Science, Daejeon 34113 (KR)
(72) Inventor: PARK, Sang-Ryoul, Daejeon 34130 (KR); YOO, Hee-Bong, Daejeon 34097 (KR); KIM, Juhwang, Daejeon 34097 (KR)
(74) Representative: EP&C
(86) International application number: PCT/KR2016/002174
(87) International publication number: WO 2016/140542

(56) References cited:
- JP-A- 2002 340 787
- KR-A- 20110 041 423
- KR-A- 20140 007 116
- US-A- 5 273 633
- US-A- 5 604 587
- US-A- 5 766 957
- US-A1- 2009 181 463
- US-A1- 2014 332 674

## Description

### [Technical Field]

The present invention relates to a measurement device comprising a highly sensitive light absorption cell for the small volume sample, more precisely a measurement device comprising a highly sensitive light absorption cell for the small volume sample which is not only able to measure the absorbance with a very small volume low concentration sample but also efficient in increasing the measurement sensitivity based on a capillary tube

### [Background Art]

According to the absorption spectrometry, a calibration curve showing the relationship between the concentration and the absorbance is prepared with several kinds of standard solutions. The absorbance is measured by operating the sample solution in the same manner, and the concentration of the target component in the sample is obtained from the calibration curve. The absorption spectrometry is fast and very accurate, so that it is widely used for the quantification of trace components of inorganic and organic compounds.

In particular, this absorption spectrometry is one of the most widely used methods for chemical analysis. The amount of chemical samples is comparatively large and such samples are easy for users to prepare by themselves, which increases the usability of this method. However, in the field of biological analysis, the amount of the sample is relatively small and expensive, so that it is often not possible to apply the absorption spectrometry.

Recently Nanodrop™ method has been developed in relation to absorption analysis in the field of biological analysis using a surface tension of an aqueous solution to form a water column and using it as a light absorption cell. According to this method, a small volume sample of several microliters can be analyzed with the absorption spectrometry, and therefore such an absorption spectrometer characteristically applicable to the small volume sample is widely used.

This Nanodrop™ has been successfully commercialized and distributed these days but the measurement sensitivity is still in question. The height of the water column formed by Nanodrop™ is only 0.2 ∼ 1 mm, so that the measurement sensitivity is very low and the formation of the water column is unstable, suggesting that the measurement reproducibility is reduced and accordingly the reliability of the measurement is in question.

US 2009/0181463 A1 discloses a device and method for carrying out experiments comprising a capillarity reaction chamber which can hold liquid in the reaction chamber. The samples may be of small volume and the experiments may comprise absorbandce experiments.

### [Disclosure]

### [Technical Problem]

It is an object of the present invention to provide a measurement device comprising a highly sensitive light absorption cell for the small volume sample which is not only able to measure the absorbance with a very small volume, low concentration sample buy also efficient in increasing the measurement sensitivity based on a capillary tube

### [Technical Solution]

The measurement device comprising a highly sensitive light absorption cell for the small volume sample according to the present invention, as defined in claim 1, comprises a light absorption cell containing a hollow capillary tube with both open ends; a light absorption cell mounting block attached on one end of the light absorption cell and containing a light irradiation part positioned on top of the light absorption cell to irradiate light to one end of the light absorption cell; and a light receiving block containing a dipping part for measuring light to immerse the other end of the light absorption cell in the sample and to detect light discharged from one end of the light absorption cell to the other end.

The light absorption cell is arranged such that the light emitted from the light irradiation part flows through one end of the light absorption cell, passes through the longitudinal direction of the light absorption cell, and is emitted to the other end of the light absorption cell.

The light absorption cell mounting block includes an upper frame and a lower frame, and additionally includes a spacer positioned between the upper frame and the lower frame and containing a flow path to reduce or increase the pressure inside of the light absorption cell and the attachment surface connected to one end of the light absorption cell.

The light absorption cell mounting block has the structure wherein the upper frame and the lower frame are arranged with the spacer containing the flow path between them in order to form the flow path.

The inner diameter of the capillary tube can be 100 ∼ 400 *µ*m and the length of the capillary tube can be 1 ∼ 5 cm.

The capillary tube can be formed with at least one of quartz, glass, plastic, and metal.

When the capillary tube is formed with quartz or glass, the thickness of the side wall of the capillary tube is up to 10 *µ*m. The capillary tube herein can be a thin film capillary tube.

When the capillary tube is formed with plastic or metal, it can additionally include a metal reflecting surface disposed in the capillary tube, and a protective film wrapping the metal reflecting surface that is made of glass or Teflon and positioned inside of the capillary tube.

The light absorption cell can additionally include a light reflecting layer surrounding the capillary tube, and a protective tube surrounding the light reflecting layer.

The light irradiation part contains an optical fiber irradiating light, and the upper frame above additionally contains an optical fiber connector to fix the optical fiber and a transparent blocking plate disposed between one end of the light absorption cell and the light irradiation part. The lower frame additionally includes a light absorption cell fixing part to fix the light absorption cell.

The flow path of the spacer can let a sample and a washing solution in and out of the light absorption cell by pressurizing or depressurizing.

A pressure controller is additionally included in the device that can increase or reduce the pressure inside of the flow path as being connected to the flow path of the spacer.

A capillary tube vertical transfer part can also be additionally included in the device for vertically adjusting the position of the light absorption cell so that the other end of the light absorption cell is immersed in the sample contained in the dipping part for measuring light.

The device also includes a sample accommodating part loaded with a sample and positioned on the bottom of the light absorption cell mounting block, a washing solution accommodating part, a photometric part for absorbance measurement, and a horizontal transfer part for horizontally moving the sample accommodating part, the washing solution accommodating part, and the photometric part for absorbance measurement. The horizontal transfer part can move in a linear direction or a rotation direction.

The device can additionally include a conductivity level measuring sensor part disposed at a distance from the other end of the light absorption cell and containing the electrodes arranged at intervals of 1 to 5 mm.

The bottom of the dipping part for measuring light is formed with quartz and the dipping part for measuring light can contain a position adjusting part disposed at the bottom of the dipping part for measuring light to detect the location of the other end of the light absorption cell.

The light receiving block includes a photometric part disposed at a position perpendicular to the other end of the light absorption cell with the bottom of the dipping part for measuring light. The photometric part can include a monochromatic filter disposed at the bottom of the dipping part for measuring light.

The horizontal transfer part contains a washing solution accommodating part and the absorption and discharge of a sample, washing and measurement of absorbance can be accomplished by moving the sample accommodating part, the washing solution accommodating part, and the photometric part by making the horizontal transfer part move in a linear direction or a rotation direction.

### [Advantageous Effect]

The measurement device comprising a highly sensitive light absorption cell for the small volume sample according to an embodiment of the present invention facilitates the measurement of absorbance more excellently with even smaller amount of samples than the conventional measurement device comprising the conventional light absorption cell.

The device of the present invention can be equipped with various sensors in the flow path, so that not only the absorbance of the sample but also other characteristics of the sample can be measured.

It is also possible to measure different kinds of samples serially with one light absorption cell by making washing of the light absorption cell possible.

### [Description of Drawings]

The application of the preferred embodiments of the present invention is best understood with reference to the accompanying drawings, wherein:
Figure 1 is a cross-sectional view illustrating the light absorption cell.
Figure 2 is a process drawing illustrating the preparation method of the light absorption cell.
Figure 3 is a process drawing illustrating the preparation method of the light absorption cell.
Figure 4 is a diagram illustrating the path of the light irradiated on the light absorption cell.
Figure 5 is a cross-sectional view illustrating the measurement device comprising a highly sensitive light absorption cell for the small volume sample according to an embodiment of the present invention.
Figure 6 is a cross-sectional view illustrating a part of the measurement device comprising a highly sensitive light absorption cell for the small volume sample according to an embodiment of the present invention.
Figure 7 is a cross-sectional view illustrating a part of the measurement device comprising a highly sensitive light absorption cell for the small volume sample according to an embodiment of the present invention.
Figure 8 is a cross-sectional view illustrating the spacer of the measurement device comprising a highly sensitive light absorption cell for the small volume sample according to an embodiment of the present invention.
Figure 9 is a cross-sectional view illustrating the horizontal transfer part of the measurement device comprising a highly sensitive light absorption cell for the small volume sample according to an embodiment of the present invention.
Figure 10 and Figure 11 are graphs illustrating the comparison of the absorbances of the light absorption cells.

### [Best Mode]

The measurement device comprising a highly sensitive light absorption cell for the small volume sample according to an embodiment of the present invention not only facilitates the measurement of absorbance even when the amount of a sample is limited but also improves the measurement sensitivity, favoring the measurement of absorbance of a very small volume low concentration sample.

In the case of the conventional technology (Nanodrop™), a water column formed in the length of about 0.1 cm by the surface tension created when pulling a trace amount of a sample solution is used as a light absorption cell. However, in this invention, a sample solution is filled in the capillary tube having an inner diameter of several hundreds of micrometers or less, and light is irradiated through the capillary tube, so that a light absorption cell of several centimeters can be used with a solution of several microliters.

Hereinafter, the preferable embodiments of the present invention are described with the attached drawings. However, the embodiments of the present invention can be modified and altered in various ways and the present invention is not limited to the following illustration. It is well understood by those in the art who has the average knowledge on this field that the embodiments of the present invention are given to explain the present invention more precisely. Therefore, the shape and size of the elements in the drawings may be exaggerated for clarity of illustration and the elements indicated by the same mark in the drawings are the same elements. The factors showing similar function or activity are also indicated by the same mark in all the drawings. In addition, the inclusion of an element throughout the specification does not exclude other elements, but may include other elements, unless specifically stated otherwise.

The measurement device comprising a highly sensitive light absorption cell for the small volume sample according to an embodiment of the present invention includes a light absorption cell containing a hollow capillary tube with both open ends; a light absorption cell mounting block attached on one end of the light absorption cell and containing a light irradiation part positioned on top of the light absorption cell to irradiate light to one end of the light absorption cell; and a light receiving block containing a dipping part for measuring light to immerse the other end of the light absorption cell in the sample and to detect light discharged from one end of the light absorption cell to the other end.

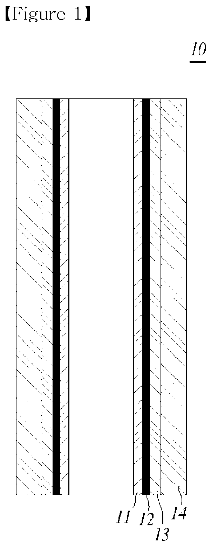

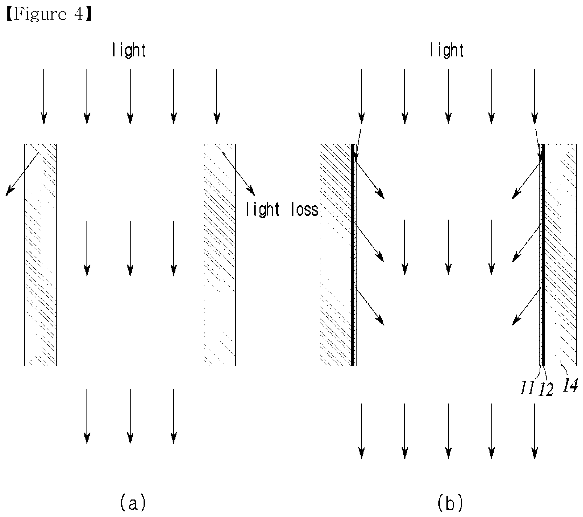

Hereinafter, the light absorption cell included in the measurement device comprising a highly sensitive light absorption cell for the small volume sample according to an embodiment of the present invention is described with Figure 1 ∼ Figure 4.

Figure 1 is a cross-sectional view illustrating the highly sensitive light absorption cell for the small volume sample according to an embodiment of the present invention.

As shown in Figure 1, the highly sensitive light absorption cell (10) for the small volume sample according to an embodiment of the present invention contains a capillary tube (11) in which a light reflecting layer (12) is formed and a protective tube (14). In addition, an epoxy layer (13) can be further included depending on the manufacturing process.

The capillary tube (11) is formed in a hollow shape so as to be filled with the measurement sample, and the light reflecting layer (12) can be formed on the outer peripheral surface thereof. The capillary tube (11) can be formed by at least one of glass, quartz, plastic, metal, and fused silica. The capillary tube can be a thin film having a thickness of 10 *µ*m or less. When the capillary tube (11) is formed of plastic or metal which does not transmit light, it need not be a thin film. The inner diameter of the capillary tube (11) is preferably 100 ∼ 400 *µ*m.

If the inner diameter of the capillary tube is less than 100 *µ*m, the capillary tube might be clogged with fine particles in the course of actual measurement and also the light irradiated to the capillary tube might be difficult to pass through the capillary tube. Therefore, the inner diameter of the capillary tube is preferably at least 100 *µ*m.

When the inner diameter of the capillary tube exceeds 400 *µ*m, the amount of the sample filled in the capillary tube becomes larger as the inner diameter of the capillary tube becomes larger. Therefore, when a limited amount of the sample is used, the length of the capillary tube filled with the sample is comparatively short, so that the light transmission distance is reduced and the measurement sensitivity is also reduced. Therefore, the inner diameter of the capillary tube is preferably 400 *µ*m or less.

To increase the measurement sensitivity of a limited amount of the sample, a long light transmission distance is preferable and to secure the transmission distance to be long, the inner diameter of the capillary tube is preferably 100 ∼ 400 *µ*m.

When the capillary tube (11) is made of a light-transmitting material, the thickness of the side wall of the capillary tube (11) is preferably up to 10 *µ*m and more preferably 5 ∼ 10 *µ*m. If the thickness of the capillary tube (11) exceeds 10 *µ*m, light might not pass through the sample solution and spills through the capillary tube (11), resulting in the decrease of the absorbance sensitivity. As the thickness of the capillary tube is thinner, the chance of the said problem above might be smaller. However, if the thickness of the capillary tube (11) is less than 5 *µ*m, it is difficult to manufacture and may be easily damaged in the course of handling. In particular, when the capillary tube (11) is made of quartz or glass, the thickness of the side wall of the capillary tube (11) is preferably up to 10 *µ*m.

In the meantime, if the length of the capillary tube is less than 1 cm, the light transmission distance is short and the measurement sensitivity may not be sufficient. If the length of the capillary tube is more than 5 cm, the volume of the required sample is increased. As the length is longer, the photoconductivity indicating the level of light passing through the light absorption cell is drastically reduced. Therefore, the length of the capillary tube (11) is preferably 1 ∼ 5 cm.

When the capillary tube is made of a thin film quartz or glass, the light absorption cell can contain a light reflecting layer (12) surrounding the outer wall of the thin film capillary tube. At this time, the capillary tube can additionally include a protective tube (14) covering the light reflecting layer (12).

When the capillary tube is made of plastic or metal, it can include a metal reflecting surface disposed inside the capillary tube. At this time, the capillary tube can additionally include a protective film disposed inside the capillary tube and surrounding the metal reflecting surface, which is made of glass or Teflon.

The light reflecting layer (12) can be made of a metal with the light reflectance of at least 50%. This kind of metal is exemplified by aluminum, silver, gold, or platinum. For example, the light reflecting layer can be formed by coating the outer surface of the capillary tube with silver (Ag) by chemical plating (silver mirror reaction). Or, the outer surface of the capillary tube is coated with aluminum, gold, or platinum by sputtering to form an excellent light reflecting layer (12). When measuring the absorbance in the ultraviolet range, it is preferable to use aluminum having excellent light reflectance. The light reflection layer (12) prevents the light loss when the light irradiated in the capillary tube attempts to deviate the course and go out of the capillary tube through the glass material of the capillary tube (see Figure 4). The thickness of the light reflection layer (12) is determined to the level that can provide enough reflectance and is not easily damaged in handling.

The protective tube (14) is formed on the outer surface of the light reflecting layer (12) to protect the capillary tube (11) formed with the light reflecting layer (12) from physical impact and support the capillary tube (11). The protective tube (14) can be made of metal or plastic. The inner diameter of the protective tube is preferably 450 ∼ 550 *µ*m, and the outer diameter of the protective tube is preferably 800 ∼ 1600 *µ*m. If the inner diameter of the protective tube is less than 450 *µ*m, it is very difficult to insert the capillary tube therein. The outer diameter is not limited but is preferably determined up to 1600 *µ*m so as to be inserted in the sample tube without any size problem, but not always limited thereto and the thicker protective tube having the outer diameter of bigger than 1600 *µ*m, in order to increase durability of the light absorption cell, can also be used. The protective tube above can be a metal tube or a plastic tube, whose inner diameter is preferably 100 ∼ 400 *µ*m.

The highly sensitive light absorption cell (10) for the small volume sample according to an embodiment of the present invention, as described in the preparation method hereinafter, can contain an epoxy layer (13) formed between the capillary tube (11) and the protective tube (14). The epoxy layer (13) plays a role as an adhesive to fix the capillary tube (11) on the protective tube (14) when it is inserted in the protective tube (14). As a material for the epoxy layer (13), it is preferable to use a black epoxy adhesive in order to prevent light from being guided to the epoxy layer.

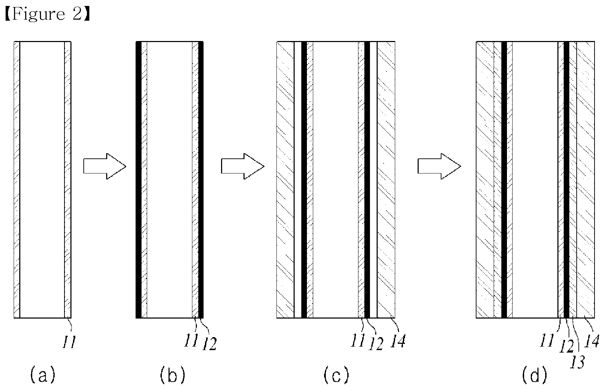

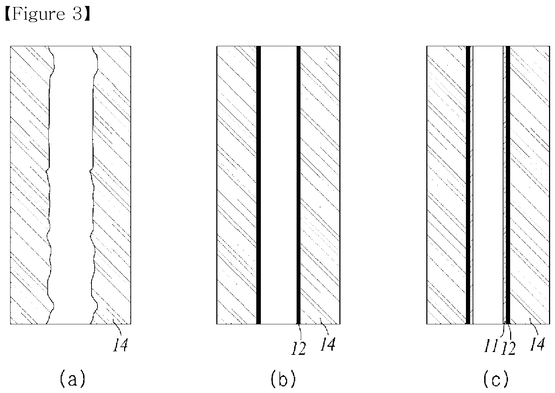

Next, the preparation method of the highly sensitive light absorption cell for the small volume sample according to an embodiment of the present invention is described hereinafter with reference to Figure 2 and Figure 3. In the below, the numbers of the inner diameter, the outer diameter, the thickness, and the length of the capillary tube (11), the light reflecting layer (12), the epoxy layer (13), and the protective tube (14) are the same as described above, therefore they are not repeated thereinafter.

Figure 2 illustrates the preparation method of the highly sensitive light absorption cell for the small volume sample according to an embodiment of the present invention.

First, the capillary tube (11) in the shape of hollow is prepared (Figure 2 (a)).

Then, the light reflecting layer (12) is formed on the outer surface of the capillary tube (11) (Figure 2 (b)). For example, the light reflecting layer can be formed by coating the outer surface of the capillary tube with silver (Ag) by silver mirror reaction.

Next, the capillary tube formed with the light reflecting layer is inserted in the protective tube (Figure 2(c)).

Then, the capillary tube and the protective tube are adhered by using epoxy. The epoxy adhesive herein is prepared with a commercial black epoxy adhesive well mixed. A part of the capillary tube is protruded out of the protective tube and an appropriate amount of epoxy is given to the protruded area. The protruded capillary tube is then pushed back to the protective tube and at this time the epoxy adhesive given thereto is also pushed back therein. The epoxy adhesive remaining outside the protective tube is wiped out before being solidified. This process is repeated on the other side. In this process, a thin film capillary tube with the end closed or a long thin film capillary tube is preferably used to prevent the epoxy adhesive from coming in. The capillary tube in the protective layer stays at room temperature for a day in order for the epoxy adhesive to dry fully (Figure 2 (d)).

Figure 3 illustrates the preparation method of the highly sensitive light absorption cell for the small volume sample according to another embodiment of the present invention.

First, the protective tube (14) is prepared. The protective tube (14) herein can be a stainless steel tube or a tube made of plastic (Figure 3 (a)).

Then, the inner surface of the protective tube is chemically or electrochemically etched to be smooth, and the light reflecting layer (12) is formed on the inner surface of the processed protective tube.

The chemical etching herein is performed by the conventional stainless steel etching method. Considering the fact that the inner diameter of the protective tube is very small, the etching solution is poured continuously so as to flow into the inner diameter.

For the electrical etching, the etching cathode electrode is inserted in the inside of the protective tube. At this time, a proper insulator is inserted in the middle of the cathode electrode so that the cathode electrode is not electrically short-circuited with the metal tube as the anode.

When the reflectance of the etched surface is high enough to be 50% or more, the formation of a separate light reflecting layer is omitted. Just in the case when the reflectance is not high enough, the reflecting layer is formed via silver mirror reaction. For the silver mirror reaction, the reaction solution can be flowed at a high speed in the inner surface of the protective tube and the remaining solution can be blown out with nitrogen (Figure (b)). In addition to the silver mirror reaction, the aluminum vacuum deposition can be used.

Next, the inner surface of the protective tube with the light reflecting layer formed above is coated with the chemically inactive protective film (for example, amorphous Teflon) to form the capillary tube (11). The amorphous Teflon coating is carried out according to the coating film forming method presented together with this material using AF 601S2-100-6 (DuPont) (Figure 3 (c)).

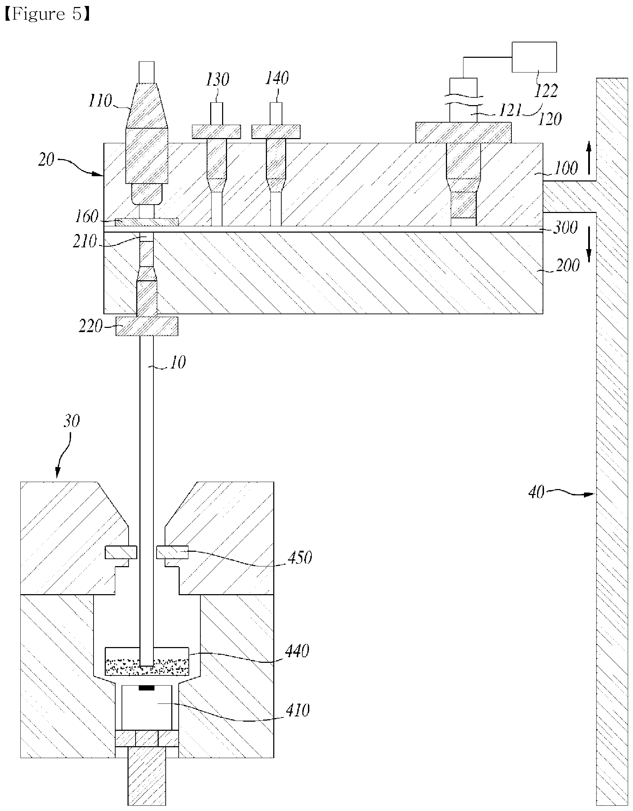

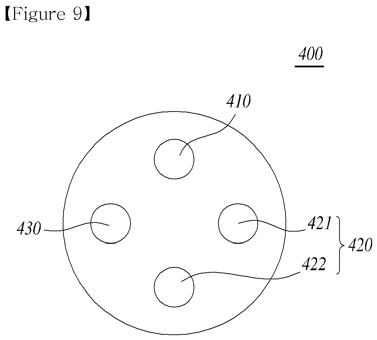

The measurement device comprising the highly sensitive light absorption cell for the small volume sample according to an embodiment of the present invention is described hereinafter with reference to Figure 5 ∼ Figure 9.

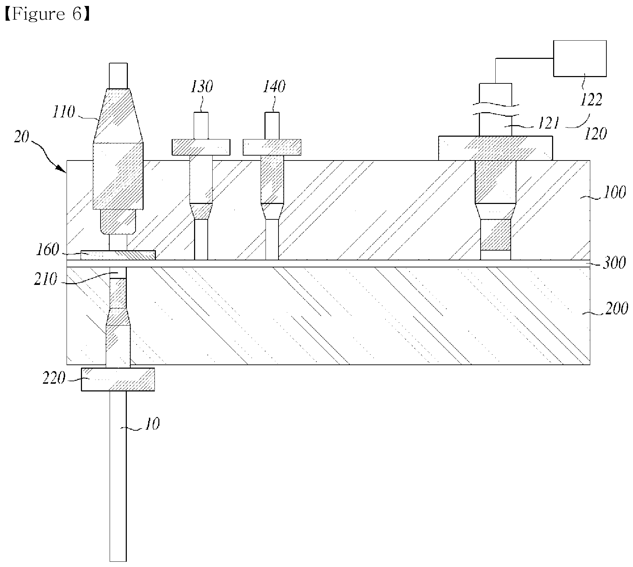

As shown in Figure 5 and Figure 6, the light absorption cell can be arranged such that light emitted from the light irradiation part flows through one end of the light absorption cell, passes through the longitudinal direction of the light absorption cell, and is emitted to the other end of the light absorption cell.

When the light absorption cell is disposed in that way, once a sample is loaded in the light absorption cell (10), the other end of the light absorption cell (10) is closed by such a liquid as distilled water, deionized water, or any other clean liquid to stop flowing of the sample according to the dipping part for measuring light and at the same time the other end of the light absorption cell (10) is immersed in the aqueous solution therein, resulting in the prevention of the irregular changes of an optical path according to the evaporation of the sample. Therefore, according to the method of the invention, the high sensitivity absorbance measurement can be performed immediately and conveniently with a trace amount of sample.

The light absorption cell mounting block (20) includes the upper frame (100) and the lower frame (200), and can also additionally include the spacer (300) positioned between the upper frame (100) and the lower frame (200) and containing the flow path to reduce or increase the pressure inside of the light absorption cell (10) and the attachment surface connected to one end of the light absorption cell (10).

The light irradiation part (110) in the upper frame (100) can contain the optical fiber. The upper frame (100) includes the optical fiber connector to hold the optical fiber and the transparent blocking plate (160) disposed between one end of the light absorption cell and the light irradiation part. The transparent blocking plate (160) plays a role of separating the sample and delivering the light.

The lower frame (200) includes the light absorption cell fixing part (220) to fix the light absorption cell (10). The other end of the fixed light absorption cell is connected to the bottom of the light irradiation part (110) in order for the irradiated light to flow in the inner diameter of the capillary tube.

As shown in the Figures, the measurement device comprising the highly sensitive light absorption cell for the small volume sample according to an embodiment of the present invention can include the light absorption cell mounting block (20), the vertical transfer part (30), and the horizontal transfer part (400) equipped with the photometric part (410). The light absorption cell mounting block (20) can contain the upper frame (100) and the lower frame (200).

The upper frame (100) and the lower frame (200) can be formed with a plastic material. For example, a plastic material such as polycarbonate having excellent strength and workability can be used. The upper frame (100) and the lower frame (200) are prepared separately and then connected with the spacer (300) interposed therebetween. At this time, the upper frame (100) and the lower frame (200) can be tightly coupled with each other by fastening bolts. The light absorption cell mounting block (20) is formed by connecting the upper frame (100) to the lower frame (200).

The measurement device comprising the highly sensitive light absorption cell for the small volume sample according to an embodiment of the present invention can contain the capillary tube vertical transfer part (40) for vertically adjusting the position of the light absorption cell so that the other end of the light absorption cell is immersed in the sample contained in the dipping part for measuring light. The capillary tube vertical transfer part (40) can be connected to the light absorption cell mounting block (20). Particularly, the capillary tube vertical transfer part (40) can be disposed on the upper frame (100) or the lower frame (200), but not always limited thereto. The capillary tube vertical transfer part (40) controls the position of the other end of the light absorption cell (10), and thereby the other end of the light absorption cell (10) can be immersed in the dipping part for measuring light (440) of the light receiving block (30) in a desired depth.

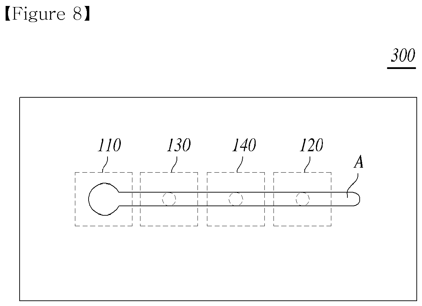

Figure 8 is a cross-sectional view illustrating the spacer of the measurement device comprising a highly sensitive light absorption cell for the small volume sample according to an embodiment of the present invention.

As shown in Figure 8, the spacer 300 serves to form a desired flow path between the upper frame (100) and the lower frame (200). The spacer (300) can include the attachment surface connected to one end of the light absorption cell and the flow path for depressurizing or pressurizing the inside of the light absorption cell. A sample and a washing solution can be in and out of the light absorption cell by the flow path for depressurizing or pressurizing. The flow path of the spacer can be connected to the pressure control part functioning to pressurize or depressurize inside the flow path.

When a laser cutter is used, various types of flow path spacer can be constructed in a precise shape. The spacer (300) can be a plastic sheet, a silicone rubber plate, or an adhesive tape. The upper frame (100) and the lower frame (200) can be tightly fitted with bolts and inserts so as to prevent the liquid from leaking.

A tube (121) is connected from the flow path to the upper frame (100) or the lower frame (200) and then stretched to the pressure control part (120) to move the sample to the light absorption cell (10) and to the flow path (A) at a desired speed and direction. At this time, a connector can be included to fix the tube (121) with some distance horizontally from the light absorption cell. The pressure control part (120) can be a vacuum pump or a pressure pump.

In the upper frame (100), the light irradiation part (110), the pressure control part (120), the first sample sensor part (130), and the second sample sensor part (140) can be formed.

The light irradiation part (110) is formed on the upper side of the light absorption cell (10) to irradiate light to the light absorption cell (10) for the measurement of absorbance. The light irradiation part (110), for example, can be formed with an optical fiber cable. The light irradiation part (110) is formed at a position where the light irradiation part (110) overlaps with the light absorption cell (10) . To do so, a light irradiation part mounting part (111) can be formed on the upper frame (100) in a shape corresponding to the light irradiation part. Therefore, the light irradiated from the light irradiation part (110) can be directly irradiated onto the top of the light absorption cell (10).

The upper part of the spacer (300), that is the upper frame (100), is arranged between one end of the light absorption cell and the light irradiation part. A transparent blocking plate (160) can be formed therein to prevent the direct contact between the sample flowed in through the light absorption cell and the light irradiation part. For example, the transparent barrier plate (160) can be a thin quartz plate. The transparent blocking plate (160) plays a role of separating the sample and delivering the light.

The pressure control part (120) depressurizes or pressurizes the flow path (A) formed in the spacer (300) to allow the sample to move through the light absorption cell (10) connected to the flow path (A). That is, by depressurizing the flow path (A) formed in the spacer (300), the sample loaded in the sample accommodating part (420) for the measurement of absorbance can flow in the light absorption cell (10) connected to the flow path (A). By pressurizing the flow path (A), the sample is discharged from the light absorption cell (10) and collected in the sample accommodating part (420) or further discharged into the waste liquid storage tank via the washing solution accommodating part (430). In the pressure control part (120), a tube (121) connected to the flow path (A) can be formed and a vacuum pump or a pressure pump (122) can be attached at the end of the tube (121) to control the pressure of the flow path (A).

The first sample sensor part (130) detects whether the sample is flowing through the flow path (A). The first sample sensor part (130) can be a pin-type conductivity measurement sensor. When the flow path filled with desalted water with a very low conductivity receives a sample, the conductivity sensor senses a large change in conductivity and sends it to the valve operating part to activate the stop valve. A description of the structure and operating principle of the pin-type conductivity sensor is given in the following reference and is applicable to this specification (S-R Park and H Swerdlow, A Miniature Electrolytic Conductivity Probe with a Wide Dynamic Range, Electro analysis 2007, 19, 2294-2300.).

The first sample sensor part (130) detects the movement of a sample by the operation of the pressure control part (120). That is, in the early stage of the absorption measurement, the pressure control part depressurizes the flow path so that when a sample fills the light absorption cell (10) and then flows through the flow path, the stop valve is activated to close in order for the sample not to be absorbed anymore. The stop valve is a high speed electric valve to close the flow path fast enough and is positioned as close to the light absorption cell as possible, by which the valve minimizes the absorption of the sample by the pressurization after the valve is closed. This way is also efficient in preventing the waste of the sample.

The pressure control part (120) can additionally include a circuit to provide a high-speed digital intermittent signal in order for the stop valve for controlling the stop valve to precisely control the flow of a minute amount of fluid under a large driving pressure. The circuit is not particularly limited and can be a digital circuit for generating a high-speed intermittent signal.

The second sample sensor part (140) is composed of at least one sensor to detect or measure the characteristics of the sample moving through the flow path (A). For the convenience of explanation, only one sensor part is shown in the drawing. Various types of measurement sensors can be provided on the upper frame in a contact manner or in a non-contact manner so as to enable the measurement of other items using the sample after the measurement of the absorbance by the light irradiation part (110).

In the lower frame (200), a light absorption cell fixing part (220) and an insertion hole (210) into which the light absorption cell fixing part (220) is inserted are formed. The upper part of the insertion hole (210) is connected to the flow path (A). The light absorption cell fixing part (220) contains the connection tunnel connected to the light absorption cell (10) and the upper part thereof matches the upper part of the insertion hole (210). In the meantime, the bottom part of the light absorption cell fixing part (220) can have a fixing tool to fix the light absorption cell fixing part (220) to the lower frame (200) manually by a user.

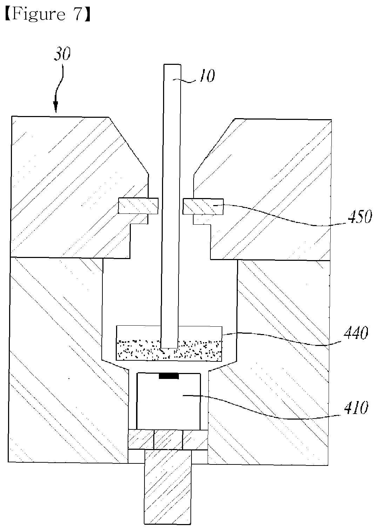

Figure 5 is a cross-sectional view illustrating the measurement device comprising a highly sensitive light absorption cell for the small volume sample according to an embodiment of the present invention. Figure 7 is a cross-sectional view illustrating a part of the measurement device comprising a highly sensitive light absorption cell for the small volume sample according to an embodiment of the present invention.

As shown in Figure 5 and Figure 7, a light receiving block (30) can be equipped on the bottom part of the lower frame (200) to receive the light irradiated by the light irradiation part (110) and passed through the light absorption cell (10). The light receiving block (30) can include a photometric part (410) arranged vertically to the other end of the light absorption cell sharing the bottom of the dipping part for light measurement in the middle. In addition, the photometric part can include a monochromatic filter disposed under the bottom of the dipping part for light measurement. The photometric part (410) can be a light receiving surface of a light detector or a light receiving surface of an optical fiber cable connected to the light detector.

By the action of the pressure control part (120) to reduce pressure, a sample is absorbed in the light absorption cell (10), followed by photometry. In the course of the photometry, the sample in the end part can flow over or evaporated to cause the changes of the emission pathway, and accordingly the light guiding efficiency can be changed. To prevent the problem above, the other end of the light absorption cell (10) is preferably immersed in about 1 mm in the light receiving block (30), for which the dipping part for light measurement (440) can be additionally included.

The dipping part for light measurement (440) prevents the flow of the sample by blocking the other end of the immersed light absorption cell (10) with distilled water during the photometry and at the same time prevents the irregular changes of the optical path which can accidently happen at the aqueous-air interface. The dipping part for light measurement (440) can be prepared in the shape of a thin quartz plate like dish and can be placed right above the photometric part (410) separately. The dipping part for light measurement (440) can also include a sensor and tubing (not shown) to detect the aqueous solution, suggesting that the aqueous solution can be refilled automatically not to be dried out during the absorption measurement. The light absorption cell dipping part (440) equipped with the supply and drainage tubing can be used not only for measuring light but also for cleaning the inside and outside of the light absorption cell (10) in place of the washing tank of the washing solution accommodating part (430).

Figure 9 is a cross-sectional view illustrating the horizontal transfer part of the measurement device comprising a highly sensitive light absorption cell for the small volume sample according to an embodiment of the present invention.

The horizontal transfer part (400) is described hereinafter with reference to Figure 9. The bottom of the light absorption cell mounting block (20) can include the horizontal transfer part (400). The horizontal transfer part (400) can contain the photometric part (410), the sample accommodating part (420; 421, 422), and the washing solution accommodating part (430). The photometric part (410) is the same as that described above, so a detailed description thereof will be omitted. The sample accommodating part (420; 421, 422) is used for the measurement of absorbance. A sample to be introduced into the light absorption cell (10) can be accommodated in a plastic container. Although two sample accommodating parts are illustrated in the drawing, the present invention is not limited thereto and one or more sample accommodating parts may be formed. The washing solution accommodating part (430) contains a washing solution for washing the inside and outside of the light absorption cell. The washing solution herein can be distilled water, etc. As explained hereinbefore, the horizontal transfer part moves horizontally in a straight or rotational direction, so that the other end of the light absorption cell can be positioned in the sample accommodating part, the washing solution accommodating part or the photometric part. Then, absorption and discharge of a sample, washing, and measurement of absorbance can be accomplished.

The horizontal transfer part (400) can perform a necessary operation by rotating around the rotation axis or performing linear movement. That is, for the measurement of absorbance, the horizontal transfer part (400) is rotated below the light absorption cell (10). For the sample aspiration, the sample accommodating part (420, 421, 422) is rotated to be positioned under the light absorption cell (10) . For the washing, the washing solution accommodating part (430) is rotated to be positioned under the light absorption cell (10). At this time, the horizontal transfer part (400) regulates the position of the light absorption cell mounting block (20) upwardly or downwardly, indicating that it controls the location of the light absorption cell (10) vertically so as not to bother the rotation of the horizontal transfer part and at the same time in order to control the height of the other end of the light absorption cell to immerse it in a proper depth in the sample solution or in the dipping tank solution. Although the horizontal transfer part (400) is illustrated as a circle in the drawing, the present invention is not limited thereto, and may be realized in the form of a rectangle or the like. At this time, the photometric part (410), the sample accommodating part (420; 421, 422), and the washing solution accommodating part (430) are preferably arranged in a line and the horizontal transfer part (400) can perform a necessary operation by making a linear movement.

The measurement device comprising a highly sensitive light absorption cell for the small volume sample according to an embodiment of the present invention can include a conductivity level measuring sensor part disposed at a distance from the other end of the light absorption cell and including electrodes arranged at intervals of 1 to 5 mm. This can be used to determine if the amount of a sample in the light absorption cell is appropriate.

Next, the operation procedure of the measurement device comprising a highly sensitive light absorption cell for the small volume sample according to an embodiment of the present invention is described.

### 1. Measurement of absorbance

To measure the absorbance, the other end of the light absorption cell (10) is immersed in the sample contained in the sample accommodating part (420; 421, 422) which is the target of the measurement. The sample herein can be a liquid such as a solution. In this state, when the pressure control part (120) depressurizes the flow path (A), the sample contained in the sample accommodating part is absorbed through the light absorption cell (10) by the pressure difference. The absorbed sample moves through the light absorption cell (10) and through the flow path (A) connected to one end of the light absorption cell (10) . When the inflow of the sample is detected by the first sample sensor part (130), the stop valve is operated to prevent the unnecessary sample from being absorbed further.

When the sample is introduced into the light absorption cell (10), the horizontal transfer part (400) is rotated so that the photometric part (410) is positioned below the other end of the light absorption cell. At this time, the frame vertical transfer part (40) moves up the light absorption cell mounting block (20) to make the rotation of the horizontal transfer part (400) smooth.

The light absorption cell mounting block (20) is vertically lowered by the vertical transfer part (40) while the other end of the light absorption cell (10) is vertically aligned with the photometric part (410) of the light receiving block (30). At this time, when the other end of the light absorption cell (10) is positioned at a target area and the location is detected by the location sensor, the vertical transfer part (40) stops working.

The light irradiated to the light absorption cell (10) by the light irradiation part (110) passes through the light absorption cell (10) longitudinally and is partially absorbed by the sample loaded inside and then is finally detected by the photometric part (410) of the light receiving block (30). The absorbance of the sample in the light absorption cell (10) is calculated by applying the measured light quantity to the Beer equation.

### 2. Washing the light absorption cell

Once the measurement of absorbance of the sample is completed, the light absorption cell is washed for the preservation/maintenance for the future measurement of absorbance of other samples.

First, after the light absorption cell mounting block (20) is raised fully by the vertical transfer part (40), the horizontal transfer part (400) is rotated to make the washing solution accommodating part (430) to be positioned under the light absorption cell (10). The light absorption cell mounting block (20) descends by the vertical transfer part (40) to make the light absorption cell (10) soaked in the washing solution in the washing solution accommodating part (430).

In this state, when the pressure control part (120) depressurizes the flow path (A), the washing solution in the washing solution accommodating part is absorbed through the light absorption cell (10) by the pressure difference. The absorbed washing solution moves through the light absorption cell (10) and through the flow path (A) connected to one end of the light absorption cell to wash the inside of the light absorption cell and the flow path. When the pressure control part (120) pressurizes the flow path (A), the washing solution flows reversely. So, the inside of the light absorption cell and the flow path are washed by repeating the depressurization and pressurization of the flow path by the pressure control part (120).

Upon completion of the washing, the pressure control part (120) pressurizes the flow path (A) until the washing solution is discharged back to the washing solution accommodating part (430). The washing solution is transferred from the storage tank to the washing tank as needed by a separate pressure device, and the washing waste solution can be transferred to the waste liquid tank by a separate decompression device.

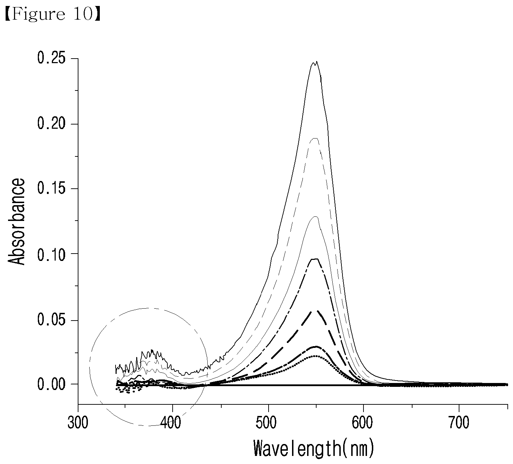

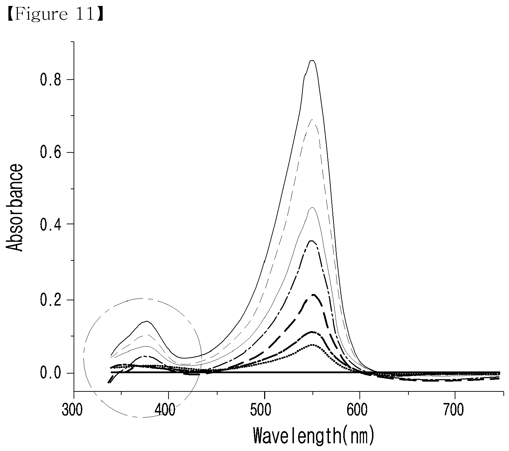

Next, the absorbance of the highly sensitive light absorption cell for the small volume sample according to an embodiment of the present invention is described with reference to Figure 10 and Figure 11. Figure 10 and Figure 11 are graphs illustrating the comparison of the absorbances between the highly sensitive light absorption cell for the small volume sample according to an embodiment of the present invention and the standard light absorption cell with the optical path (light transmission distance) 1 cm and the volume of the sample of 1000 *µ*ℓ*.*

As a reagent for the measurement of absorbance (sample), a red colored alkaline phenolphthalein solution was used. The phenolphthalein solution was prepared at different concentrations, which was inserted in the light absorption cell, followed by the observation of the spectrum indicating the degree of light absorption in the visible light region. The measurement solution used in this experiment was also applied to the standard light absorption cell (optical path length: 1 cm, sample volume: 1000 *µ*ℓ).

Referring to the region indicated by the circular dotted line in Figures 10 and 11, it can be seen that the highly sensitive light absorption cell for the small volume sample according to an embodiment of the present invention provides a stable absorption curve with excellent sensitivity even for a trace amount, low-concentration phenolphthalein solution, unlike the standard light absorption cell. That is, hundreds *µ*ℓ of sample was used for the standard light absorption cell, while several *µ*ℓ of sample was used for the light absorption cell of the present invention. When the light absorption cell of the present invention was used, the absorbance could be measured with better sensitivity (about 4 times improvement in sensitivity) even with a small sample.

The marks shown in each drawing are as follows.
present invention was used, the absorbance could be measured with better sensitivity (about 4 times improvement in sensitivity) even with a small sample.

The marks shown in each drawing are as follows.
10: light absorption cell
20: light absorption cell mounting block
30: light receiving block
40: vertical transfer part
100: upper frame
200: lower frame
300: spacer
400: horizontal transfer part

Those skilled in the art will appreciate that the conceptions and specific embodiments disclosed in the foregoing description may be readily utilized as a basis for modifying or designing other embodiments for carrying out the same purposes of the present invention. The scope of the invention is set forth in the appended claims.

## Claims

1. A measurement device comprising:
a vertically arranged light absorption cell (10) comprising a hollow capillary tube (11) with both open ends, the capillary tube (11) to be filled with a sample;
a light absorption cell mounting block (20) attached on one end of the light absorption cell (10) and comprising a light irradiation part (110) positioned on top of the light absorption cell (10) to irradiate light to one end of the light absorption cell (10), wherein the light absorption cell (10) is arranged such that the light emitted from the light irradiation part (110) flows through one end of the light absorption cell (10), passes through the capillary tube (11) in the longitudinal direction of the light absorption cell (10), and is emitted from the other end of the light absorption cell (10); and
a light receiving block (30) comprising a dipping part for measuring light (440) to immerse the other end of the light absorption cell (10) in the sample and to detect light emitted from the other end of the light absorption cell (10),
**characterized in that** the light absorption cell mounting block (20) further comprises an upper frame (100) and a lower frame (200) and additionally comprises a spacer (300) positioned between the upper frame (100) and the lower frame (200) and comprising a flow path (A) to reduce or increase a pressure inside of the light absorption cell (10) and an attachment surface connected to one end of the light absorption cell (10); and
a pressure control part (120) connected to the flow path (A) of the spacer (300) to increase or reduce the pressure inside of the flow path (A),
wherein the light irradiation part (10) comprises an optical fiber irradiating light, the upper frame (100) additionally comprises an optical fiber connector to fix the optical fiber and a transparent blocking plate (160) disposed between one end of the light absorption cell (10) and the light irradiation part (110), and the lower frame (200) additionally comprises a light absorption cell fixing part (220) to fix the light absorption cell (10),
wherein the flow path (A) of the spacer (300) can let the sample and a washing solution in and out of the light absorption cell (10) by pressurizing or depressurizing.

2. The measurement device according to claim 1, wherein an inner diameter of the capillary tube (11) is 100 ∼ 400 *µ*m and an length of the capillary tube (11) is 1 ∼ 5 cm.

3. The measurement device according to claim 1, wherein the capillary tube (11) is made of at least one of those materials selected from the group consisting of quartz, glass, plastic, and metal.

4. The measurement device according to claim 3, wherein when the capillary tube (11) is made of quartz or glass, a thickness of a side wall of the capillary tube (11) is up to 10 *µ*m,
optionally wherein the light absorption cell (10) additionally comprises a light reflecting layer (12) surrounding the capillary tube (11), and a protective tube (14) surrounding the light reflecting layer (12).

5. The measurement device according to claim 4, wherein when the capillary tube (11) is formed with plastic or metal, it additionally comprises a metal reflecting surface disposed in the capillary tube (11), and a protective film wrapping the metal reflecting surface that is made of glass or Teflon and positioned inside of the capillary tube (11).

6. The measurement device according to claim 1, wherein the pressure control part (120) comprises a digital circuit for generating a high-speed intermittent signal.

7. The measurement device according to claim 1, wherein a capillary tube vertical transfer part (40) is additionally comprised to immerse the other end of the light absorption cell (10) in the sample loaded in the dipping part for measuring light (440) by vertically adjusting the position of the light absorption cell (10), wherein the capillary tube vertical transfer part (40) is connected to the light absorption cell mounting block (20), particularly, the capillary tube vertical transfer part (40) is disposed on the upper frame (100) or the lower frame (200), wherein the capillary tube vertical transfer part (40) controls the position of the other end of the light absorption cell (10), and thereby the other end of the light absorption cell (10) is immersed in the dipping part for measuring light (440) of the light receiving block (30) in a desired depth.

8. The measurement device according to claim 1, wherein a sample accommodating part (420) loaded with the sample and positioned on a bottom of the light absorption cell mounting block (20), a washing solution accommodating part (430), a photometric part (410), and a horizontal transfer part (400) for horizontally moving the sample accommodating part (420), the washing solution accommodating part (430), and the photometric part (410) are additionally comprised, and the horizontal transfer part (400) is moved in a linear direction or a rotation direction.

9. The measurement device according to claim 1, wherein a conductivity level measuring sensor part disposed at a distance from the other end of the light absorption cell (10) and coprising electrodes arranged at intervals of 1 to 5 mm is additionally comprised.

10. The measurement device according to claim 1, wherein a bottom of the dipping part for measuring light (440) is made of quartz, and a position adjusting part to detect a location of the other end of the light absorption cell (10) is additionally arranged on the bottom of the dipping part for measuring light (440).

11. The measurement device according to claim 1, wherein the light receiving block (30) comprises a photometric part (410) disposed at a position perpendicular to the other end of the light absorption cell (10) with the bottom of the dipping part for measuring light (440), and the photometric part (410) comprises a monochromatic filter disposed at the bottom of the dipping part for measuring light (440).

12. The measurement device according to claim 11, wherein the horizontal transfer part (400) comprises a washing solution accommodating part (430) and absorption and discharge of the sample, washing and measurement of absorbance is accomplished by moving the sample accommodating part (420) and the washing solution accommodating part (430) by making the horizontal transfer part move (400) in a linear direction or a rotation direction.

## Patentansprüche

1. Messvorrichtung umfassend:
eine vertikal angeordnete Lichtabsorptionszelle (10) umfassend ein hohles Kapillarrohr (11) mit beiden offenen Enden, wobei das Kapillarrohr (11) mit einer Probe zu füllen ist;
einen Lichtabsorptionszelle-Montageblock(20), der an einem Ende der Lichtabsorptionszelle (10) angebracht ist und einen Lichtbestrahlungsteil (110) umfasst, der auf der Oberseite der Lichtabsorptionszelle (10) positioniert ist, um Licht auf ein Ende der Lichtabsorptionszelle (10) zu strahlen, wobei die Lichtabsorptionszelle (10) angeordnet ist, dass das von dem Lichtbestrahlungsteil (110) emittierte Licht durch ein Ende der Lichtabsorptionszelle (10) fließt, durch das Kapillarrohr (11) in Längsrichtung der Lichtabsorptionszelle (10) verläuft und von dem anderen Ende der Lichtabsorptionszelle (10) emittiert wird; und
einen Lichtempfangsblock (30) mit einem Eintauchteil zum Messen von Licht (440), um das andere Ende der Lichtabsorptionszelle (10) in die Probe einzutauchen und um von dem anderen Ende der Lichtabsorptionszelle (10) emittiertes Licht zu erfassen,
**dadurch gekennzeichnet, dass** der Lichtabsorptionszelle-Montageblock (20) weiterhin einen oberen Rahmen (100) und einen unteren Rahmen (200) umfasst und zusätzlich einen Abstandshalter (300), der zwischen dem oberen Rahmen (100) und dem unteren Rahmen (200) angeordnet ist, und einen Flusspfad (A) zur Verringerung oder Erhöhung eines Drucks innerhalb der Lichtabsorptionszelle (10) und eine mit einem Ende der Lichtabsorptionszelle (10) verbundene Befestigungsfläche umfasst; und
ein Drucksteuerteil (120), das mit dem Flusspfad (A) des Abstandshalters (300) verbunden ist, um den Druck innerhalb des Flusspfads (A) zu erhöhen oder zu verringern,
wobei das Lichtbestrahlungsteil (10) eine optische Faser umfasst, die Licht ausstrahlt, wobei der obere Rahmen (100) zusätzlich einen Lichtleitfaserverbinder zur Fixierung der Lichtleitfaser und eine zwischen einem Ende der Lichtabsorptionszelle (10) und dem Lichteinstrahlungsteil (110) angeordnete transparente Sperrplatte (160) aufweist und wobei der untere Rahmen (200) zusätzlich einen Lichtabsorptionszelle-Befestigungsteil (220) zur Fixierung der Lichtabsorptionszelle (10) aufweist,
wobei der Flusspfad (A) des Abstandshalters (300) die Probe und eine Waschlösung in die Lichtabsorptionszelle (10) durch Druckbeaufschlagung oder Druckentlastung ein- und austreten lassen kann.

2. Messvorrichtung nach Anspruch 1, wobei ein Innendurchmesser des Kapillarrohrs (11) 100∼400µm und eine Länge des Kapillarrohrs (11) 1∼5cm beträgt.

3. Messvorrichtung nach Anspruch 1, wobei das Kapillarrohr (11) aus mindestens einem der Materialien hergestellt ist, die aus der Gruppe bestehend aus Quarz, Glas, Kunststoff und Metall ausgewählt sind.

4. Messvorrichtung nach Anspruch 3, wobei, wenn das Kapillarrohr (11) aus Quarz oder Glas hergestellt ist, eine Dicke einer Seitenwand des Kapillarrohrs (11) bis zu 10µm beträgt,
optional wobei die Lichtabsorptionszelle (10) zusätzlich eine das Kapillarrohr (11) umgebende lichtreflektierende Schicht (12) und ein die lichtreflektierende Schicht (12) umgebendes Schutzrohr (14) aufweist.

5. Messvorrichtung nach Anspruch 4, wobei das Kapillarrohr (11), wenn es mit Kunststoff oder Metall ausgebildet ist, zusätzlich eine in dem Kapillarrohr (11) angeordnete reflektierende Metallfläche und eine die reflektierende Metallfläche umhüllende Schutzfolie aus Glas oder Teflon aufweist, die im Inneren des Kapillarrohrs (11) angeordnet ist.

6. Messvorrichtung nach Anspruch 1, wobei der Drucksteuerteil (120) eine digitale Schaltung zur Erzeugung eines hochgeschwindigkeitsintermittierenden Signals umfasst.

7. Messvorrichtung nach Anspruch 1, wobei zusätzlich ein Kapillarrohr-Vertikaltransferteil (40) vorgesehen ist, um das andere Ende der Lichtabsorptionszelle (10) in die in den Eintauchteil geladene Probe zum Messen von Licht (440) durch vertikales Einstellen der Position der Lichtabsorptionszelle (10) einzutauchen, wobei das Kapillarrohr-Vertikaltransferteil (40) mit dem Lichtabsorptionszelle-Befestigungsblock (20) verbunden ist, insbesondere der Kapillarrohr-Vertikaltransferteil (40) am oberen Rahmen (100) oder am unteren Rahmen (200) angeordnet ist, wobei der Kapillarrohr-Vertikaltransferteil (40) die Position des anderen Endes der Lichtabsorptionszelle (10) mitbestimmt und dadurch das andere Ende der Lichtabsorptionszelle (10) in den Eintauchteil zum Messen von Licht (440) des Lichtempfangsblocks (30) in einer gewünschten Tiefe eingetaucht wird.

8. Messvorrichtung nach Anspruch 1, wobei ein Probenaufnahmeteil (420), der mit der Probe geladen und auf einem Boden des Lichtabsorptionszelle-Montageblocks (20) positioniert ist, ein Waschlösungsaufnahmeteil (430), ein photometrischer Teil (410) und ein horizontaler Transferteil (400) zum horizontalen Bewegen des Probenaufnahmeteils (420), des Waschlösungsaufnahmeteils (430) und des photometrischen Teils (410) zusätzlich umfasst sind und der horizontale Transferteil (400) in einer linearen Richtung oder einer Drehrichtung bewegt wird.

9. Messvorrichtung nach Anspruch 1, wobei zusätzlich ein in einem Abstand vom anderen Ende der Lichtabsorptionszelle (10) angeordnetes Leitfähigkeitsniveau-Mess-Sensorteil und Elektroden umfasst, die in Abständen von 1 bis 5mm angeordnet sind.

10. Messvorrichtung nach Anspruch 1, wobei ein Boden des Eintauchteils zum Messen von Licht (440) aus Quarz hergestellt ist, und ein Positionsjustierteil zur Erfassung einer Stelle des anderen Endes der Lichtabsorptionszelle (10) zusätzlich auf dem Boden des Eintauchteils zum Messen von Licht (440) angeordnet ist.

11. Messvorrichtung nach Anspruch 1, wobei der Lichtempfangsblock (30) einen photometrischen Teil (410) umfasst, der an einer Position senkrecht zum anderen Ende der Lichtabsorptionszelle (10) mit dem Boden des Eintauchteils zum Messen von Licht (440) angeordnet ist, und der photometrische Teil (410) einen monochromatischen Filter umfasst, der am Boden des Eintauchteils zum Messen von Licht (440) angeordnet ist.

12. Messvorrichtung nach Anspruch 11, wobei der horizontale Übertragungsteil (400) einen Waschlösungsaufnahmeteil (430) und Absorption und Abgabe der Probe umfasst, wobei das Waschen und die Messung der Absorption durch Bewegen des Probenaufnahmeteils (420) und des Waschlösungsaufnahmeteils (430) durch Bewegen des horizontalen Übertragungsteils (400) in einer linearen Richtung oder einer Drehrichtung durchgeführt wird.

## Revendications

1. Dispositif de mesure comprenant :
une cellule d'absorption de la lumière disposée à la verticale (10) comprenant un tube capillaire creux (11) avec les deux extrémités ouvertes, le tube capillaire (11) devant être rempli avec un échantillon ;
un bloc de montage de cellule d'absorption de la lumière (20) fixé sur une extrémité de la cellule d'absorption de la lumière (10) et comprenant une partie d'irradiation de lumière (110) positionnée sur la partie supérieure de la cellule d'absorption de la lumière (10) afin d'irradier de la lumière vers une extrémité de la cellule d'absorption de la lumière (10), dans lequel la cellule d'absorption de la lumière (10) est prévue de sorte que la lumière émise par la partie d'irradiation de lumière (110) circule dans une extrémité de la cellule d'absorption de la lumière (10), passe par le tube capillaire (11) dans la direction longitudinale de la cellule d'absorption de la lumière (10), et soit émise par l'autre extrémité de la cellule d'absorption de la lumière (10) ;
un bloc de réception de lumière (30) comprenant une partie d'immersion destinée à mesurer la lumière (440) afin d'immerger l'autre extrémité de la cellule d'absorption de la lumière (10) dans l'échantillon et de détecter la lumière émise par l'autre extrémité de la cellule d'absorption de la cellule (10),
**caractérisé en ce que** le bloc de montage de cellule d'absorption de la lumière (20) comprend en outre un cadre supérieur (100) et un cadre inférieur (200) et comprend en outre une entretoise (300) positionnée entre le cadre supérieur (100) et le cadre inférieur (200) et comprenant un trajet d'écoulement (A) afin de réduire ou d'augmenter une pression à l'intérieur de la cellule d'absorption de la lumière (10), et une surface de liaison reliée à une extrémité de la cellule d'absorption de la lumière (10) ; et
une partie de régulation de la pression (120) reliée au trajet d'écoulement (A) de l'entretoise (300) afin d'augmenter ou de réduire la pression à l'intérieur du trajet d'écoulement (A),
dans lequel la partie d'irradiation de lumière (10) comprend une fibre optique qui irradie de la lumière, le cadre supérieur (100) comprend en outre un connecteur de fibre optique destiné à fixer la fibre optique et une plaque de blocage transparente (160) disposée entre une extrémité de la cellule d'absorption de la lumière (10) et la partie d'irradiation de lumière (110), et le cadre inférieur (200) comprend en outre une partie de fixation de cellule d'absorption de la lumière (220) destinée à fixer la cellule d'absorption de la lumière (10),
dans lequel le trajet d'écoulement (A) de l'entretoise (300) peut laisser l'échantillon et une solution de lavage entrer dans et sortir de la cellule d'absorption de la lumière (10) par pressurisation ou dépressurisation.

2. Dispositif de mesure selon la revendication 1, dans lequel un diamètre interne du tube capillaire (11) est de 100 à 400 µm et une longueur du tube capillaire (11) est de 1 à 5 cm.

3. Dispositif de mesure selon la revendication 1, dans lequel le tube capillaire (11) est composé d'au moins l'un de matériaux choisis parmi le groupe consistant en du quartz, du verre, du plastique, et du métal.

4. Dispositif de mesure selon la revendication 3, dans lequel, lorsque le tube capillaire (11) est composé de quartz ou de verre, une épaisseur d'une paroi latérale du tube capillaire (11) peut atteindre 10 µm,
dans lequel, éventuellement, la cellule d'absorption de la lumière (10) comprend en outre une couche de réflexion de la lumière (12) qui entoure le tube capillaire (11), et un tube de protection (14) qui entoure la couche de réflexion de la lumière (12).

5. Dispositif de mesure selon la revendication 4, dans lequel, lorsque le tube capillaire (11) est formé en plastique ou en métal, il comprend en outre une surface réfléchissante métallique disposée dans le tube capillaire (11), et un film de protection qui enveloppe la surface réfléchissante métallique et qui est en verre ou en Téflon, et positionné à l'intérieur du tube capillaire (11).

6. Dispositif de mesure selon la revendication 1, dans lequel la partie de régulation de la pression (120) comprend un circuit numérique destiné à générer un signal intermittent à grande vitesse.

7. Dispositif de mesure selon la revendication 1, dans lequel une partie de transfert vertical de tube capillaire (40) est en outre prévue afin d'immerger l'autre extrémité de la cellule d'absorption de la lumière (10) dans l'échantillon chargé dans la partie d'immersion afin de mesurer la lumière (440) en ajustant verticalement la position de la cellule d'absorption de la lumière (10), dans lequel la partie de transfert vertical de tube capillaire (40) est reliée au bloc de montage de cellule d'absorption de la lumière (20), et, plus particulièrement, la partie de transfert vertical de tube capillaire (40) est disposée sur le cadre supérieur (100) ou le cadre inférieur (200), dans lequel la partie de transfert vertical de tube capillaire (40) contrôle la position de l'autre extrémité de la cellule d'absorption de la lumière (10), et, ainsi, l'autre extrémité de la cellule d'absorption de la lumière est immergée dans la partie d'immersion afin de mesurer la lumière (440) du bloc de réception de lumière (30) à une profondeur souhaitée.

8. Dispositif de mesure selon la revendication 1, dans lequel une partie qui contient un échantillon (420) chargée avec l'échantillon et positionnée sur une partie inférieure du bloc de montage de cellule d'absorption de la lumière (20), une partie qui contient une solution de lavage (430), une partie photométrique (410), et une partie de transfert horizontal (400) destinée à déplacer horizontalement la partie qui contient un échantillon (420), la partie qui contient une solution de lavage (430), et la partie photométrique (410) sont en outre prévues, et la partie de transfert horizontal (400) est déplacée dans une direction linéaire ou une direction de rotation.

9. Dispositif de mesure selon la revendication 1, dans lequel une partie de capteur de mesure de niveau de conductivité disposée à une distance de l'autre extrémité de la cellule d'absorption de la lumière (10) et qui comprend des électrodes disposées à des intervalles de 1 à 5 mm est en outre prévue.

10. Dispositif de mesure selon la revendication 1, dans lequel une partie inférieure de la partie d'immersion destinée à mesurer la lumière (440) est composée de quartz, et une partie d'ajustement de position destinée à détecter un emplacement de l'autre extrémité de la cellule d'absorption de la lumière (10) est en outre prévue sur la partie inférieure de la partie d'immersion destinée à mesurer la lumière (440).

11. Dispositif de mesure selon la revendication 1, dans lequel le bloc de réception de lumière (30) comprend une partie photométrique (410) disposée à un emplacement perpendiculaire à l'autre extrémité de la cellule d'absorption de la lumière (10) avec la partie inférieure de la partie d'immersion destinée à mesurer la lumière (440), et la partie photométrique (410) comprend un filtre monochrome disposé au niveau de la partie inférieure de la partie d'immersion destinée à mesurer la lumière (440).

12. Dispositif de mesure selon la revendication 11, dans lequel la partie de transfert horizontal (400) comprend une partie qui contient une solution de lavage (430), et l'absorption et l'évacuation de l'échantillon le lavage et la mesure de l'absorbance sont effectués en déplaçant la partie qui contient un échantillon (420) et la partie qui contient une solution de lavage (430) en déplaçant la partie de transfert horizontal (400) dans une direction linéaire ou une direction de rotation.
